# EUROPÄISCHE PATENTSCHRIFT

(11) **EP 0 845 515 B1**
(45) Veröffentlichungstag und Bekanntmachung des Hinweises auf die Patenterteilung: **03.07.2002**
(21) Anmeldenummer: 97119856.9
(22) Anmeldetag: 13.11.1997
(51) Int. Cl.: C09J 7/02

(54) **Klebeband**
Adhesive tape
Ruban adhésif

(30) Priorität: 30.11.1996 DE 19649728
(43) Veröffentlichungstag der Anmeldung: 03.06.1998
(73) Patentinhaber: Tesa AG, 20253 Hamburg (DE)
(72) Erfinder: Lühmann, Bernd, Dr., 22846 Norderstedt (DE); Junghans, Andreas, 22457 Hamburg (DE)

(56) Entgegenhaltungen:
- EP-A- 0 735 121
- WO-A-95/06691
- DE-A- 3 331 016
- DE-C- 4 222 849
- US-A- 5 516 581

## Beschreibung

Die Erfindung betrifft ein Klebeband für eine durch Zug rückstandsfrei und beschädigungslos wiederlösbare Verklebung, sowie seine Verwendung.

Hochdehnbare elastische Klebfolien für wiederlösbare Verklebungen, die durch Ziehen im wesentlichen in Richtung der Verklebungsebene wiederlösbar sind, sind bekannt und im Handel unter der Bezeichnung "tesa Power-Strips" erhältlich. Damit hergestellte Verklebungen bieten kraftvollen Halt und lassen sich doch spurlos wiederablösen ohne Beschädigung des Untergrundes oder der Fügeteile, wie dies in DE 33 31 016 C2 beschrieben ist. DE 4.222.849, DE 4.233.872, DE 4.428.587, DE 4.431.914 und DE 195 11 288 beschreiben u.a. spezielle Ausführungen und Applikationen vorgenannter Klebfolien.

Mehrschichtige Klebfolien, welche hoch dehnbare wenig elastische oder auch hochdehnbare elastische Folienträger enthalten sowie Anwendungen selbiger Klebstoff-Folien sind ebenfalls bekannt, so aus US 4,024,312 "Pressure-Sensitive Adhesive Tape for medical use - having an extensible, elastic block copolymer backing", WO 92/11332 "Removable Adhesive Tape" (PSA tape using highly extensible backing with photopolymerized acrylic PSA), WO 92/11333 (PSA tape using highly extensible essentially inelastic backing), WO 93/01979 "Sichern von Stapeln mit Stretch-Klebeband" und WO 94/21157 "Article Support using stretch releasing adhesive".

So beschreibt WO 92/11333 ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung < ca 50% Rückstellvermögen aufweist. US 4,024,312 beschreibt entsprechend entklebende Selbstklebebänder von im wesentlichen kautschukelastischer Natur.

In der Praxis zeigt sich, daß mit den zuvor genannten Selbstklebebändern auf glatten und festen Untergründen im Allgemeinen hohe Verklebungsfestigkeiten erreicht werden können. Auf rauhen Untergründen ist die Verklebungsfestigkeit insbesondere für Produkte von geringer Dicke, jedoch auch für Selbstklebebänder höherer Schichtstärke, für zahlreiche Anwendungen ungenügend. Ursache für die unzureichende Verklebungsfestigkeit ist wahrscheinlich vornehmlich eine nicht ausreichende Verklebungsfläche, bedingt durch eine zu niedrige Konformibilität der Klebebänder an rauhe und unregelmäßige Oberflächen, insbesondere wenn zwei rauhe Untergründe miteinander verklebt werden sollen. Z. B. werden bei Verklebungen planarer Materialien mittels tesa Power-Strips auf gestrichener Rauhfasertapete bei praxisgerechten Anpreßdrucken (100 N/7,4 cm²) oft nur Verklebungsflächen von ca 10% bis 40% der haftklebrigen Fläche erreicht. Aber auch bei der Verklebung auf glatte planare Oberflächen kann eine unzureichende Verklebungsfläche Begründung für eine mangehafte Verklebungsfestigkeit sein. Ursache ist wohl der Einschluß von Luftblasen in den Verklebungsflächen. Entsprechende Luftblasen sind oft auch durch hohe Anpreßdrucke nicht vollständig zu eliminieren. In ungünstigen Fällen können Verklebungen, die entsprechende Lufteinschlüsse aufweisen, im Vergleich zu vollflächig und luftblasenfrei verklebten Mustern drastisch reduzierte Verklebungsfestigkeiten bedingen.

US 5,516,581 und WO 95/06691 beschreiben durch Dehnen im wesentlichen in der Verklebungsebene wiederablösbare Selbstklebebänder, deren Träger polymere Schäume enthalten. Insbesondere beschreibt WO 95/06691, daß durch Einsatz von Polymerschäume enthaltende Trägermaterialien, durch Verstrecken wiederablösbare Selbstklebebänder erhältlich sind, die eine deutlich verbesserte Anschmiegsamkeit an rauhen und ungleichmäßigen Oberflächen aufweisen. Infolge der hierdurch erreichten höheren Verklebungsfläche lassen sich mit diesen Produkten auch auf rauhen und unregelmäßig geformten Untergründen hohe Verklebungsfestigkeiten realisieren.

Die in US 5,516,581 und WO 95/06691 beschriebenen Schaumstoffträger weisen jedoch eine Anzahl gravierender Nachteile auf:
- Als Schaumstoff-Träger finden ausschließlich solche Einsatz, welche beim Wiederablösen der Klebebänder nicht reißen. Entsprechend reißfeste Träger benötigen jedoch einen z. T. sehr komplexen Mehrschichtaufbau, vgl. die Ansprüche 13, 14, 17 in US 5,516,581 sowie Ansprüche 4, 15 in WO 95/06691.
- Einschichtige Schaumstoffträger sind nur begrenzt einsetzbar:
   - Einschichtige Schaumstoffträger entsprechend Anspruch 1 aus WO 95/06691 haben eine Mindestdicke von wenigstens 30 mils = 760µm.
   - Einschichtige Schaumstoffträger nach Anspruch 1 in WO 95/06691 sind weiterhin dadurch begrenzt, daß ausschließlich solche mit einem E-Modul (Young's modulus) von < ca 2400 psi = 16,9 MPa geeignet sind.
- Das Rückstellvermögen der in US 5,516,581 beschriebenen Klebebänder liegt nach dem Wiederablöseprozeß sämtlichst bei < 50%. Klebebänder mit merklich elastischem Rückstellverhalten lassen sich damit erfindungsgemäß nicht einsetzen.

Ein bedeutender Teil der am Markt erhältlichen dünnschichtigen Polymerschäume ist damit als Einsatzmaterial in vorgenannter Anwendung nicht geeignet.

Aufgabe der vorliegenden Erfindung war es, die vorgenannten Nachteile zu überwinden. Erreicht wird dies durch Klebebänder, wie sie in den Ansprüchen näher gekennzeichnet sind, insbesondere durch
- Verwendung von polymeren Schäumen als Trägermaterialien, welche durch einen E-Modul von weniger als 16 MPa und eine Schichtstärke von ca 200 bis ca 600µm, bevorzugt zwischen 300 und 550µm gekennzeichnet sind,
- welche in Kombination mit Haftklebemassen, die über eine hohe Verstreckbarkeit bei gleichzeitig hoher Reißfestigkeit verfügen, wodurch
- resultierende Selbstklebebänder durch Verstrecken insbesondere in der Verklebungsebene rückstandsfrei wiederablösbar sind, und weder die Haftklebemasse noch der verwendete Schaumstoffträger während des Ablöseprozesses reißt.

Erst die Kombination von hoch reißfesten, hoch verstreckbaren Haftklebemassen mit vorgenannten polymeren Schäumen, welche in Kombination mit erfindungsgemäß eingesetzten Haftklebemassen während des Ablöseprozesses nicht zerreißen, ermöglichet die Realisierung sehr dünnschichtiger und doch hoch anschmiegsamer Selbstklebebänder, welche sich durch Verstrecken insbesondere in der Verklebungsebene rückstandsfrei und zerstörungsfrei wiederablösen lassen. Durch die hohe Konformibilität auch zu rauhen Untergründen, wie z. B. gestrichener Rauhfasertapete, werden im Vergleich zu Klebstoff-Folien, welche keinen Schaumstoffzwischenträger nutzen, sehr hohe Verklebungsflächen erreicht.

Die Verwendung entsprechender dünnschichtiger Schaumstoffe erlaubt gleichzeitig die Realisierung niedriger Ablösekräfte (Stripkräfte), ein bedeutender Vorteil für die praktische Anwendung. Neben der damit leichteren Handhabung der Klebstoff-Folien beim Ablöseprozeß, ermöglichen niedrige Stripkräfte desweiteren ein zerstörungsfreies Ablösen auch von sehr empfindlichen Untergründen, wie sie z. B. durch viele Tapeten vorgegeben sind.

Ein Vorteil der erfindungsgemäßen Selbstklebebänder ist ferner, daß bei Verklebung dünner flexibler Materialien auf sehr rauhe Untergründe, z. B. bei der Verklebung von dünnpapierigen Postern auf Rauhfasertapete, sich im verklebten Bereich die Struktur des rauhen Untergrundes weniger stark abbildet.

Weitere Vorteile schließen den geringen Materialaufwand zur Realisierung schaumstoffzwischenträgerhaltiger Klebstoff-Folien ein, welche durch Verstrecken insbesondere in der Verklebungsebene rückstands- und zerstörungsfrei wiederablösbar sind.

### Beispielhafte Anwendungen:

Rückstandsfrei und zerstörungsfrei wiederablösbare Selbstklebebänder für:
- Originalverschlußapplikationen, ein und beidseitig haftklebrig.
- die Fixierung von Postern, Bildern, Kalendern, Postkarten, Hinweisschilder, selbstklebenden Haken, auch vorkonfektioniert,
- Etiketten, z. B. Preisauszeichnungsetiketten,
- allgemein zum Verbinden von zu einem späteren Zeitpunkt wieder zu entklebender Materialien.

### Einsatzmaterialien

### Haftklebemassen

Als Haftklebemassen finden bevorzugt solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere können modifiziert sein, z. B. funktionalisiert durch Umsetzung mit Maleinsäureanhydrid. Blockcopolymere von Vinylaromaten und Isobutylen sind ebenfalls erfindungsgemäß einsetzbar. Sämtliche der vorgenannten Polymere können alleine oder im Gemisch miteinander genutzt werden. Typische Einsatzkonzentrationen für die Styrolblockcopolymere liegen im Bereich zwischen 15Gew.% und 75Gew.%, bevorzugt im Bereich zwischen 30Gew.% und 60Gew.% besonders bevorzugt im Bereich zwischen 35Gew.% und 55Gew.%.

Als Klebrigmacher sind u. a. geeignet: Kolophonium und seine Derivate, aliphatische, aromatenmodifizierte aliphatische, aromatische und phenolmodifizierte Klebharze um nur einige zu nennen. Einsatzkonzentrationen der Harze liegen typischerweise im Bereich zwischen 15Gew.% und 75Gew.%, bevorzugt im Bereich 30Gew.% und 65Gew.%, besonders bevorzugt im Bereich zwischen 35Gew.% und 60Gew.%. Bevorzugt eingesetzt werden im Falle der Verwendung von Kolophonium und dessen Derivate Ester von teil- oder vollhydriertem Kolophonium.

Als endblockverträgliche Harze (vornehmlich mit den Vinylaromatenblöcken verträgliche Harze) können Homo- und Copolymere von Vinylaromaten, wie z. B. Styrol oder α-Methylstyrol, Polyphenylenoxide, aber auch phenylenoxidmodifizierte Harze genutzt werden.

Weitere optimale Abmischkomponenten umfassen Weichmacheröle und Flüssigharze (Einsatzkonzentrationen zwischen 0 und max. ca 35Gew.%), Füllstoffe (verstärkende und nicht verstärkende), z. B. Siliziumdioxid, insbesondere synthetische Silica, Glas (gemahlen oder in Form von Kugeln), Aluminiumoxide, Zinkoxide, Calciumcarbonate, Titandioxide, Ruße, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als weitere Polymere können natürliche und synthetische, wie z. B. Naturkautschuk, synthetische Polyisoprene, Polybutadiene, Polychloroprene, SBR, Kraton Liquid (Shell Chemicals), niedermolekulare Styrol-Dien Blockcopolymere, wie z. B. Kraton LVSI 101, Polyisobutylene usw. vorhanden sein, welche die vinylaromatenhaltigen Blockcopolymere bis zu ca 50Gew.% ersetzen können.

Erfindungsgemäße Haftklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische Aktivierung erzeugt wird.

Geeignete Haftklebemassen sind neben den zuvor beschriebenen auf Basis vinylaromatenhaltiger Blockcopolymere all solche, welche über eine für den Ablöseprozeß ausreichende Reißfestigkeit und Kohäsion verfügen. Entsprechende Haftklebemassen können allein oder in Kombination mit solchen auf Basis vinylaromatenhaltiger Blockcopolymere eingesetzt werden. Erfindungsgemäß geeignet sind z. B. haftklebrige Acrylatcopolymere copolymerisiert mit Makromonomeren, wobei die Makromonomere eine Glastemperatur von > +40°C aufweisen. Die hohe Reißfestigkeit entsprechender Copolymere wird wahrscheinlich durch die Assoziation der Makromonomere erreicht. Geeignete Makromonomere sind z. B. methacryloylterminierte Polymethylmethacrylate.

### Schaumstoffe

Geeignete Schaumstoffe (Schaumstoffträger) basieren bevorzugt auf Polyolefinhomound -copolymeren. Homo- und Copolymere können allein oder in Mischung eingesetzt werden. Insbesondere bevorzugt finden Ethylenvinylacetatcopolymere, sowie Gemische von Ethylenvinylacetatcopolymeren und/oder Polyvinylacetaten mit Polyethylenen Verwendung, wobei als Polyethylene bevorzugt solche von niederer Dichte (LDPE, LLDPE, VLDPE) eingesetzt werden. Als weitere Polymere sind geeignet: Polyvinylacetate, EPDM, thermoplastische Elastomere auf Basis von Styrolblockcopolymeren, Polyurethane auf Basis aromatischer und aliphatischer Diisocyanate, PVC, Polychloroprene und Naturkautschuk.

Die Dicken der eingesetzten Schaumstoffe liegen insbesondere zwischen ca 200 µm und 600µm, bevorzugt zwischen 250µm und 550µm. Raumdichten betragen ca 40 kg/m³ bis 450 kg/m³, bevorzugt 50 kg/m³ bis 300 kg/m³. Genutzt werden können verhautete oder nicht verhautete Schäume von integraler oder nicht integraler Struktur.

### Verankerung der Haftklebemassen auf den Schäumen

Zur Erzeugung einer ausreichenden Verankerung der eingesetzten Haftklebemassen auf den Schaumstoffen werden diese vorteilhaft bei der Schaumherstellung und / oder vor der Beschichtung einer Druckvorbehandlung unterzogen. Geeignete Vorbehandlungsverfahren sind u. a. die Fluorvorbehandlung, die Coronavorbehandlung, die Plasmabehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Zwischen Schaumstoff und Haftklebemassen kann optional eine Sperrschicht integriert sein, um die Wanderung migrationsfähiger Materialien zwischen Haftklebemassen und Träger zu reduzieren.

### Selbstklebebänder

Erfindungsgemäße Selbstklebebänder enthalten wenigstens einen Schaumstoffträger, welcher einseitig oder beidseitig mit einer Haftklebemasse ausgerüstet ist. Die Klebebänder verfügen über eine ausreichende Reißdehnung und Reißfestigkeit, so daß sie durch Verstrecken insbesondere in der Verklebungsebene rückstands und zerstörungsfrei von den Verklebungsuntergründen wiederabgelöst werden können. Im Falle beidseitig mit Haftklebemasse beschichteter Schaumstoffträger können die Klebemassen von gleicher oder unterschiedlicher Rezeptur sein, den Schaumstoff vollflächig oder teilweise, etwa im Streifenstrich, bedecken sowie mit gleichem oder unterschiedlichem Masseauftrag auf beide Klebebandseiten aufgetragen sein. Klebmassen können aus einer oder aus mehreren Klebmasseschichten aufgebaut sein. Z. B. kann eine Klebstoffschicht aus zwei Lagen bestehen, welche beide vinylaromatenhaltige Blockcopolymere nutzen, wobei die Blockcopolymere von unterschiedlicher Art sind. Auch kann auf eine erste Klebstoffschicht enthaltend vinylaromatenhaltige Blockcopolymere eine solche auf Basis von Naturkautschuk oder Polybutadien oder Polyisobutylen oder "Kraton Liquid" (Shell Chemicals) oder Gemische vorgenannter Polymere aufgebracht sein.

Selbstklebebänder sind dadurch gekennzeichnet, daß ihre Reißdehnungen größer als 200%, bevorzugt größer als 300%, besonders bevorzugt größer als 400% betragen.

Reißfestigkeiten der verwendeten Haftklebemassen liegen insbesondere bei größer 1.5 MPa, bevorzugt bei größer 3 MPa, besonders bevorzugt bei größer 5 MPa.

Schichtstärken der die Reißfestigkeit bestimmenden Haftklebemassen betragen insbesondere ≥ ca 60µm, bevorzugt ≥ 100µm, besonders bevorzugt ≥ 150µm.

Das Verhältnis von Reißkraft zu Stripkraft der Selbstklebebänder ist bei Abzugswinkeln von weniger als 10° gegen die Verklebungsfläche größer als 1,2 : 1, bevorzugt größer als 1,5 : 1, besonders bevorzugt größer als 2 : 1.

### Konfektionierform

Konfektionierformen erfindungsgemäßer Klebebänder umfassen sowohl Klebebandrollen als auch Klebebandstücke definierter Abmessungen, z. B. in Form von Stanzlingen. Klebebandstücke definierter Abmessungen können wahlweise entsprechend DE 4.428.587 ein ausgeformtes Ende, - etwa spitz zulaufendes Ende - aufweisen, oder entsprechend DE 4.431.914 mit trennlackierter Anfasserfolie oder trennlackiertem Trennpapier ausgerüstet sein.

### Herstellung

Erfindungsgemäße Klebstoff-Folien lassen sich durch Lösemittelbeschichtung, Kaltoder Heißlaminierung und durch Schmelzbeschichtung der zu verwendenden Schaumstoffe herstellen.

### Prüfmethoden

### Höchstzugkraft, Reißdehnung

Die Messungen erfolgen in Anlehnung an DIN 53504 mit Normprüfkörpern der Größe S 2 bei einer Separationsgeschwindigkeit von 300mm/min.

### Elastizitätsmodul (E-Modul)

Die Bestimmung des Elastizitätsmoduls erfolgt analog ASTM D 882 mit nachfolgenden Prüfkörperdimensionen: Prüfstreifenlänge = 140mm; Einspannlänge (Distanz zwischen Klemmbacken) = 100mm; Prüfstreifenbreite = 15mm. Separationsgeschwindigkeit = 25,4 mm/min.

### Kippscherfestigkeit

Zur Bestimmung der Kippscherfestigkeit wird die zu prüfende Klebstoff-Folie der Abmessung 20mm * 50mm, welche an einem Ende beidseitig mit einem nicht haftklebrigen Anfasserbereich versehen ist (erhalten durch Aufkaschieren von 25µm starker biaxial verstreckter Polyesterfolie der Abmessung 20mm * 13mm (Hostaphan RN 25)), mittig auf eine hochglanzpolierte quadratische Stahlplatte der Abmessung 40mm * 40mm *3mm (Länge * Breite * Dicke) verklebt. Die Stahlplatte ist rückseitig mittig mit einem 10cm langen Stahlstift versehen, welcher vertikal auf der Plattenfläche sitzt. Die erhaltenen Probekörper werden mit einer Kraft von 100N auf den zu prüfenden Haftgrund verklebt (Andruckzeit = 5sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ablösekraft (Stripkraft)

Zur Ermittlung der Ablösekraft (Stripkraft) wird eine Klebstoff-Folie der Abmessungen 50mm * 20mm (Länge * Breite), mit am oberen Ende nicht haftklebrigem Anfasserbereich (s. o.), zwischen zwei Stahlplatten (deckungsgenau zueinander angeordnet) der Abmessungen 50mm x 30mm, entsprechend dem unter "Kippscherfestigkeit" beschriebenen Vorgehen, jedoch mit Anpreßdrucken von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24h bei +40°C gelagert. Nach Rekonditionierung auf RT wird der Klebfolienstreifen mit einer Zuggeschwindigkeit von 1000mm/min parallel zur Verklebungsebene herausgelöst. Dabei wird die erforderliche Ablösekraft (Stripkraft) in N/cm gemessen. Die Stahlplatten werden abschließend auf vorhandene Klebmasserückstände überprüft.

### Verklebungsfläche auf Glas

Klebfolienstreifen der Abmessungen 20 mm x 50 mm werden mittig auf einen planaren Stahluntergrund der Abmessungen 200 mm x 100 mm verklebt. Der so hergestellte Verbund wird vertikal, deckungsgleich auf eine Glasplatte gleicher Abmessung verklebt und mit 100 N gleichmäßig mittig angedrückt. Die Andruckzeit beträgt 5 sec. Es erfolgt eine Dreifachbestimmung. Die erhaltene Verklebungsfläche auf der Glasoberfläche wird visuell ermittelt und in Prozent der Klebstoff-Folienoberfläche angegeben.

### Verklebungsfläche auf Rauhfasertapete

Zur Ermittlung der Verklebungsfläche auf rauhen Untergründen werden Klebfolienstreifen der Abmessungen 20 mm x 50 mm mittig auf einen planaren Stahluntergrund der Abmessungen 200 mm x 100 mm verklebt. Der so hergestellte Verbund wird vertikal, deckungsgleich auf eine gestrichene Rauhfasertapete (Tapete: Erfurt Körnung 52; Farbe: Herbol Zenit LG; Tapete verklebt auf Preßspanplatte) gleicher Abmessung, die dünn mit Alubronce bepudert wurde, aufgelegt und mit 100 N gleichmäßig mittig angedrückt. Die Andruckzeit beträgt 5 sec. Es erfolgt eine Dreifachbestimmung. Muster lassen sich leicht vertikal von der bepuderten Rauhfasertapete abheben. Die erhaltene Verklebungsfläche wird visuell über die auf die Klebfolienoberfläche übertragenen Alubronze ermittelt und in Prozent der Klebstoff-Folienoberfläche angegeben.

### Prüfung auf rückstandsfreies und zerstörungsfreies Wiederablösen

Eine entsprechende Prüfung wird im Rahmen der Bestimmung der Ablösekraft (Stripkraft) (s. o.) für die Untergründe Stahl // Stahl durchgeführt. Zur Prüfung der rückstandsfreien und zerstörungsfreien Wiederablösbarkeit auch auf anderen Untergründen, z. B. PMMA // gestrichene Rauhfasertapete (Tapete: Erfurt Körnung 52; Farbe: Herbol Zenit LG; Tapete verklebt auf Preßspanplatte), werden entsprechende Prüfkörper, wie oben unter "Ablösekraft (Stripkraft)" beschrieben, erstellt und die Verklebung entweder maschinell oder manuell gelöst (gestrippt). Bewertet wird, ob Klebmasserückstände auf den Verklebungsuntergründen vorhanden sind respektive ob Zerstörungen der Verklebungsuntergründe detektiert werden können.

### Beispiele

### Beispiel 1

Auf unten gelistete Schaumstoffe wird beidseitig eine Haftklebemasse bestehend aus 20 Tln. SBS Blockcopolymer (Vector 8508, Exxon), 80 Tln. SIS Blockcopolymer (Vector 4211, Exxon), 100 Tln. eines Pentaesters von teilhydriertem Kolophonium (Foralyn 110, Hercules) und 1 TI. eines primären Antioxidantes (Irganox 1010, Ciba Geigy) [= Rezeptur 1] bzw. einer Haftklebemasse bestehend aus 50 Tln. Naturkautschuk vom K-Wert 145, 50 Tln. Foralyn 110 und 1 Tl. Irganox 1010 [= Rezeptur 2] durch Kaltlamination aufgebracht. Hierzu wird der gewählte Schaumstoff auf den auf silikonisiertem Trennpapier vorliegenden Haftklebstoff aufgelegt, danach mit einer gummibeschichteten Stahlwalze von 25 cm Breite bei einem Anpreßdruck von 50 N fünf mal überrollt. Das so erhaltene Zwischenprodukt wird in identischer Weise auf der zweiten Seite mit Haftklebstoff beschichtet. Prüfungen werden nach 24-stündiger Konditionierung der so erhaltenen Muster im Klimaraum (50 % rel. Feuchte, T = RT = 23°C) durchgeführt. Prüfkörper (Klebstoff-Folien) sind in allen Fällen quer zur Fertigungsrichtung des verwendeten Schaumstoffträgers herausgestanzt. für die beispielhaft genutzten Schaumstoffe selbst wurde das Elastizitätsmodul sowohl in Fertigungsrichtung der Schaumstoffe als auch quer zur Fertigungsrichtung ermittelt. Es ergeben sich nachfolgende Eigenschaften:

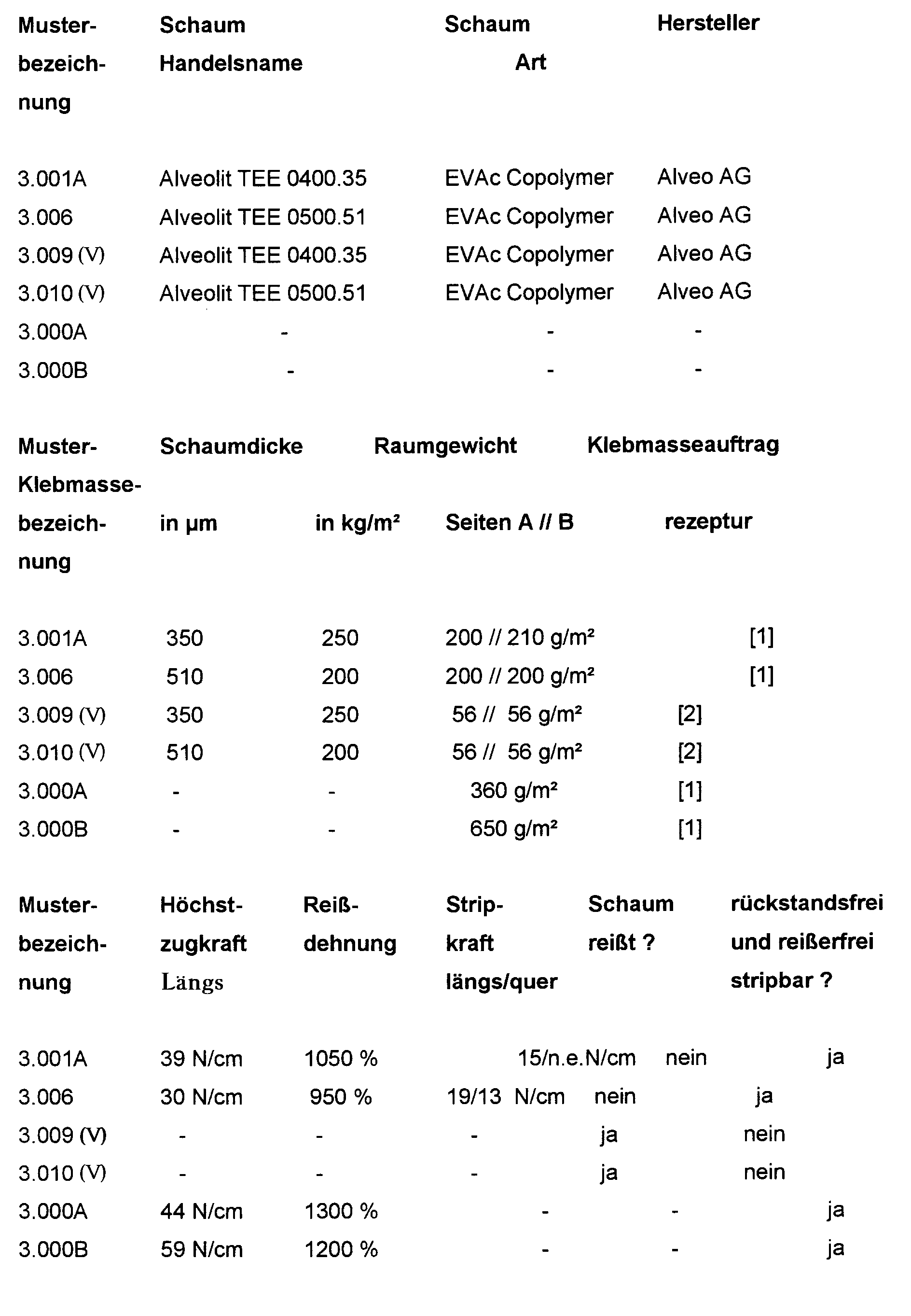

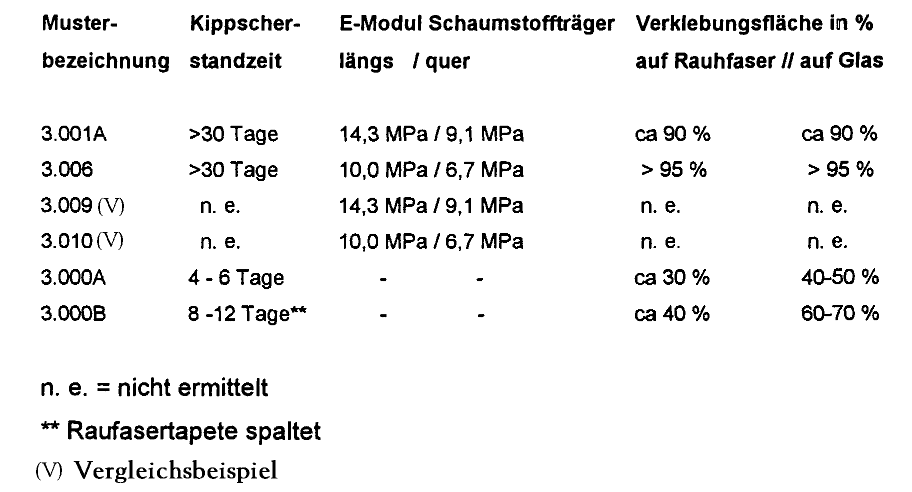

In vorliegendem Beispiel lassen sich ausschließlich solche, einen Schaumstoffzwischenträger enthaltende, Klebstoff-Folien rückstands- und zerstörungsfrei wiederablösen, welche Haftklebemassen mit einer ausreichend hohen Reißfestigkeit nutzen. Durch Verwendung der Schaumstoffzwischenträger wird eine nahezu 100-prozentige Verklebungsfläche sowohl auf dem ausgewählten rauhen Rauhfaseruntergrund als auch auf dem glatten Glasuntergrund erreicht. Die erhaltenen Verklebungsfestigkeiten (Kippscherstandzeiten) liegen für die einen Schaumstoffzwischenträger nutzenden Klebstoff-Folien deutlich oberhalb der Klebstoff-Folie, welche keinen Schaumstoffzwischenträger besitzt.

### Beispiel 2

Auf unten gelistete Schaumstoffe wird beidseitig eine Haftklebemasse entsprechend Rezeptur [1] aufgebracht. Die Fertigung der Klebfolienmuster erfolgt analog zu Beispiel 1. Es ergeben sich nachfolgende Ergebnisse:

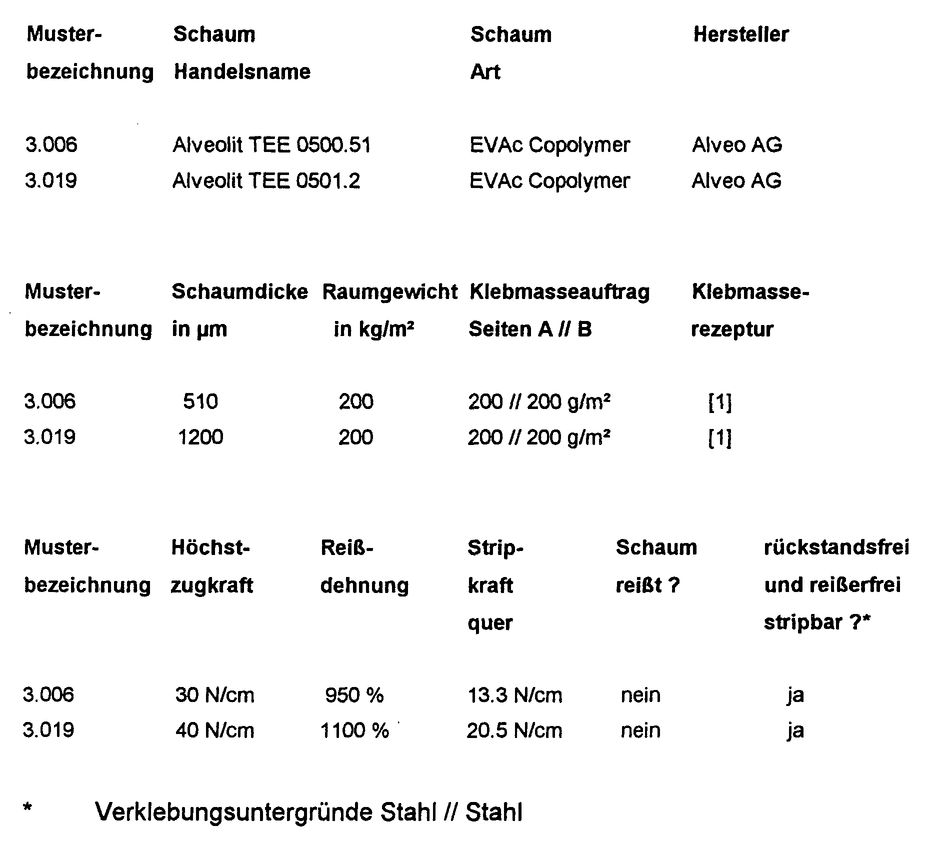

In vorliegendem Beispiel wird durch Einsatz eines sehr dünnen Schaumes die Ablösekraft merklich reduziert, daß Ablösen also deutlich erleichtert.

## Patentansprüche

1. Klebeband für eine durch Zug rückstandsfrei und beschädigungslos wiederlösbare Verklebung, mit einem Schaumstoffträger, der einseitig oder beidseitig mit einer Selbstklebemasse beschichtet ist, **dadurch gekennzeichnet, daß**
a) auf mindestens einer der beiden Seiten des Schaumstoffträgers eine Selbstklebemasse aufgebracht ist, deren Verhältnis von Höchstzugkraft (in Anlehnung an DIN53504 mit normprüfkörpern der Größe S2 bei einer Separationsgeschwindigkeit von 300 mm/min.) zu Stripkraft (Abzugskraft) (beschrieben im Teil "Prüfmethoden" der Beschreibung) bei einem Abzugswinkel von weniger als 10° zur Verklebungsfläche größer als 1,2 : 1 ist, und
b) der Schaumstoffträger einen E-Modul (analog ASTM D 882: Prüfstreifenlänge = 140 mm; Einspannlänge (Distanz zwischen klemmbacken) = 100 mm; Prüfstreifenbreite = 15 mm. Separationsgeschwindigkeit = 25,4 mm/min.) von unter 16 MPa und eine Dicke von 200 - 600 µm aufweist.

2. Klebeband nach Anspruch 1, **dadurch gekennzeichnet, daß** der Schaumstoffträger beidseitig mit Selbstklebemasse beschichtet ist.

3. Klebeband nach Anspruch 1, **dadurch gekennzeichnet, daß** die Selbstklebemasse eine solche auf Basis von Blockcopolymeren insbesondere enthaltend Vinylaromaten ist.

4. Klebeband nach Anspruch 1, **dadurch gekennzeichnet, daß** die Selbstklebemasse eine solche auf Basis von Blockcopolymeren enthaltend Polymerblöcke aus Vinylaromaten (A-Blöcke) und solchen gebildet durch Polymerisation von 1,3-Dienen (D-Blöcke) ist.

5. Klebeband nach Anspruch 1, **dadurch gekennzeichnet, daß** die Selbstklebemasse Klebrigmacher und gegebenenfalls weitere Abmischkomponenten und/oder Zusätze enthält.

6. Klebeband nach Anspruch 1, **dadurch gekennzeichnet, daß** der Schaumstoffträger einen E-Modul von 4 - 15 MPa hat.

7. Klebeband nach Anspruch 1, **dadurch gekennzeichnet, daß** der Schaumstoffträger eine Dicke von 300 - 550 µm hat.

8. Klebeband nach Anspruch 1, **dadurch gekennzeichnet, daß** es in Form von Abschnitten vorliegt, wobei das eine Ende des Abschnitts einen nicht-klebenden Anfasser aufweist und das andere Ende ggf. eine zum Ende hin abnehmende Klebfläche aufweist.

9. Klebeband nach Anspruch 8, **dadurch gekennzeichnet, daß** der Anfasser durch aufkaschierte Folienabschnitte gebildet wird, deren mit der Selbstklebemasse sich berührende Seiten anti-adhäsiv ausgerüstet sind.

10. Verwendung eines Abschnitts eines Klebebandes nach einem der Ansprüche 1 - 9 für eine rückstandsfrei und beschädigungslos wiederlösbare Verklebung, **dadurch gekennzeichnet, daß** man an einem Ende des Abschnitts zieht.

11. Verwendung nach Anspruch 10, **dadurch gekennzeichnet, daß** man den beidseits mit Selbstklebemasse beschichteten Abschnitt zusammen mit einem Haken, einer Basisplatte oder einem aufzuhängenden Gegenstand ggf. auf diesen vorkonfektioniert verwendet.

## Claims

1. Adhesive tape for a bond which can be redetached by pulling, without residue or damage, having a foam backing coated on one or both sides with a self-adhesive composition, **characterized in that**
a) on at least one of the two sides of the foam backing there is applied a self-adhesive composition whose ratio of maximum tensile strength (in accordance with DIN 53504 using standard test specimens of size 52 at a separation rate of 300 mm/min) to stripping force (peel force) (described in the section "Test method" of the description) at a peel angle of less than 10° to the bond surface is greater than 1.2:1, and
b) the foam backing has a modulus of elasticity in accordance with ASTM D 882 with the following test specimen dimensions: length of test strip = 140 mm; clamped length (distance between clamping jaws) = 100 mm; width of test strip = 15 mm. Separation rate = 25.4 mm/min of less than 16 MPa and a thickness of 200 - 600 µm.

2. Adhesive tape according to Claim 1, **characterized in that** the foam backing is coated on both sides with self-adhesive composition.

3. Adhesive tape according to Claim 1, **characterized in that** the self-adhesive composition is based on block copolymers especially comprising vinylaromatic compounds.

4. Adhesive tape according to Claim 1, **characterized in that** the self-adhesive composition is based on block copolymers comprising polymer blocks of vinylaromatic compounds (A blocks) and those formed by polymerization of 1,3-dienes (D blocks).

5. Adhesive tape according to Claim 1, **characterized in that** the self-adhesive composition comprises tackifiers and, if desired, further blend components and/or additives.

6. Adhesive tape according to Claim 1, **characterized in that** the foam backing has a modulus of elasticity of 4 - 15 MPa.

7. Adhesive tape according to Claim 1, **characterized in that** the foam backing has a thickness of 300 - 550 µm.

8. Adhesive tape according to Claim 1, **characterized in that** it is in the form of sections, where one end of the section has a non-tacky grip tab and the other end, if desired, has an adhesive area which decreases towards the end.

9. Adhesive tape according to Claim 8, **characterized in that** the grip tab is formed by laminated-on film sections whose sides in contact with the self-adhesive composition have been given an antiadhesive finish.

10. Use of a section of an adhesive tape according to one of Claims 1-9 for a bond which can be redetached without residue or damage, **characterized in that** one end of the section is pulled.

11. Use according to Claim 10, **characterized in that** the section coated on both sides with self-adhesive composition is used together with a hook, a baseplate or an article which is to be suspended, and, if desired, is preassembled on such articles.

## Revendications

1. Ruban adhésif pour un collage redétachable par traction, sans résidu et sans dommage, comportant un support en mousse qui est revêtu d'un côté ou des deux avec un matière autoadhésive, **caractérisé en ce que**
a) au moins sur un des deux côtés du support en mousse, est appliquée une matière autoadhésive dont le rapport de la résistance à la traction (sur la base de DIN 53504 avec des éprouvettes normalisées de la taille S2, à une vitesse de séparation de 300 mm/min) à la force d'arrachage (force de détachement) (décrite dans la partie "Méthodes d'essai" de la description) sous un angle de détachement de moins de 10° par rapport à la surface de collage, est > 1,2:1, et
b) le support en mousse présente un module d'élasticité (selon ASTM D 882 : longueur de l'éprouvette = 140 mm ; longueur d'extension (distance entre mâchoires) = 100 mm ; largeur de l'éprouvette = 15 mm ; vitesse de séparation = 25,4 mm/min) de moins de 16 MPa et une épaisseur de 200-600 µm.

2. Ruban adhésif selon la revendication 1, **caractérisé en ce que** le support en mousse est revêtu des deux côtés avec une matière autoadhésive.

3. Ruban adhésif selon la revendication 1, **caractérisé en ce que** la matière autoadhésive est une matière à base de copolymères séquencés, en particulier contenant des groupes vinylaromatiques.

4. Ruban adhésif selon la revendication 1, **caractérisé en ce que** la matière autoadhésive est une matière à base de copolymères séquencés contenant des séquences polymères constituées de groupes vinylaromatiques (séquence A) et ceux formés par polymérisation de 1,3-diènes (séquence D).

5. Ruban adhésif selon la revendication 1, **caractérisé en ce que** la matière autoadhésive contient des agents adhésifs et éventuellement d'autres composants de mélange et/ou additifs.

6. Ruban adhésif selon la revendication 1, **caractérisé en ce que** le support en mousse a un module d'élasticité de 4-15 MPa.

7. Ruban adhésif selon la revendication 1, **caractérisé en ce que** le support en mousse a une épaisseur de 300-550 µm.

8. Ruban adhésif selon la revendication 1, **caractérisé en ce qu'**il se trouve sous forme de pièces, une extrémité de la pièce présentant une zone de préhension non collante et l'autre extrémité présentant éventuellement une aire de collage diminuant jusqu'à l'extrémité.

9. Ruban adhésif selon la revendication 8, **caractérisé en ce que** la zone de préhension est constituée de segments de pellicule contrecollés dont les faces entrant en contact avec la matière autoadhésive sont munies d'un antiadhésif.

10. Utilisation d'un segment de ruban adhésif selon l'une quelconque des revendications 1 à 9, pour un collage redétachable sans résidu et sans dommage, **caractérisée en ce qu'**on tire à une extrémité du segment.

11. Utilisation selon la revendication 10, **caractérisée en ce qu'**on utilise le segment revêtu de matière autoadhésive des deux côtés, conjointement avec un crochet, une plaque de base ou un objet suspendu, éventuellement préparé au préalable sur celui-ci.
